(19) Europäisches Patentamt
European Patent Office
Office européen des brevets

(11) **EP 4 221 878 B1**

(12) **EUROPEAN PATENT SPECIFICATION**

(45) Date of publication and mention
of the grant of the patent:
**30.07.2025  Bulletin 2025/31**

(21) Application number: **21802856.1**

(22) Date of filing: **30.09.2021**

(51) International Patent Classification (IPC):
***B01J 4/00*** (2006.01)     ***B01J 8/08*** (2006.01)

(52) Cooperative Patent Classification (CPC):
**B01J 4/002; B01J 4/004; B01J 4/008; B01J 8/085**

(86) International application number:
**PCT/US2021/052817**

(87) International publication number:
**WO 2022/072599 (07.04.2022 Gazette 2022/14)**

(54) **CHEMICAL FEED DISTRIBUTORS AND METHODS OF USING THE SAME**

CHEMISCHE ZUFUHRVERTEILER UND VERFAHREN ZU IHRER VERWENDUNG

DISTRIBUTEURS D'ALIMENTATION EN PRODUITS CHIMIQUES ET LEURS PROCÉDÉS D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **30.09.2020  US 202063085264 P**

(43) Date of publication of application:
**09.08.2023  Bulletin 2023/32**

(73) Proprietor: **Dow Global Technologies LLC**
**Midland, MI 48674 (US)**

(72) Inventors:
• **PRETZ, Matthew T.**
  **Freeport, Texas 77541 (US)**
• **YUAN, Quan**
  **Lake Jackson, Texas 77566 (US)**
• **KAMAT, Pritish M.**
  **Lake Jackson, Texas 77566 (US)**
• **LI, Liwei**
  **Freeport, Texas 77541 (US)**
• **LUO, Lin**
  **Freeport, Texas 77541 (US)**

(74) Representative: **Boult Wade Tennant LLP**
**Salisbury Square House**
**8 Salisbury Square**
**London EC4Y 8AP (GB)**

(56) References cited:
EP-A1- 3 101 093     EP-B1- 0 958 235
WO-A1-98/19731     US-A- 6 042 717

Description

BACKGROUND

*Field*

The present specification generally relates chemical processing and, more specifically, to systems and processes for introducing chemical feed streams.

*Technical Background*

Gaseous chemicals may be fed into reactors or other vessels through feed distributors. Feed distributors may be utilized to promote balanced distribution of a feed chemical stream into such reactors or vessels. Such distribution of feed chemicals may promote preferred reactions and may maintain mass transport equilibriums in chemical systems. US 6 042 717 A discloses an FCC feed injection arrangement which injects feed transversely from sides of a restricted opening into a stream of FCC catalyst to provide feed and catalyst contacting. EP0958235A1 describes a distributor of a feed into a vessel allowing the separated flow of a part of the feed into the vessel and a part of the feed back out of the vessel.

SUMMARY

In a number of chemical processes, chemical feed streams are fed through chemical feed distributors into a hot environment, such as a reactor or a combustor. These hot environments may elevate the circumferential maximum surface temperature of the chemical feed distributors and may increase the risk of formation of carbonaceous deposits, referred as coking thereafter. This is particularly problematic in fluidized bed vessels, where fluidized solids in the vessel greatly enhances the heat transfer from the hot environment to the feed distributor through radiative and conductive heat transfer. In turn, the coking may create a risk of plugging and flow maldistribution. Accordingly, there is a need for improved chemical feed distributors. It has been found that chemical feed distributors which distribute only a portion of the chemical feed stream into the vessel, where another portion of the chemical feed stream is not fed into the vessel, may promote reduced peak surface temperatures on the chemical feed distributor. Embodiments of such chemical feed distributors are described herein. One or more embodiments of such chemical feed distributors may maintain a relatively steady circumferential maximum surface temperature and, therefore, reduce the risk of coking and the side effects associated with coking. Embodiments of the present disclosure meet this need by utilizing a chemical feed distributor with chemical feed stream recirculation, such that linear velocity may be maintained and stagnant zones within the chemical feed distributor may be reduced.

Apparatus according to one aspect of the invention is provided according to claim 1.

A method for distributing a chemical feed stream according to a second aspect of the invention is provided according to claim 11.

Additional features and advantages will be set forth in the detailed description which follows, and in part will be readily apparent to those skilled in the art from that description or recognized by practicing the embodiments described herein, including the detailed description which follows and the claims.

It is to be understood that both the foregoing general description and the following detailed description describe various embodiments and are intended to provide an overview or framework for understanding the nature and character of the claimed subject matter.

BRIEF DESCRIPTION OF THE DRAWINGS

FIG. 1A is a schematic illustration of a cross-sectional overhead view of a chemical feed distributor in accordance with one or more embodiments of the present disclosure;

FIG. 1B is a schematic illustration of an perspective view of a first embodiment of a chemical feed distributor in accordance with one or more embodiments of the present disclosure;

FIG. 1C is a schematic illustration of a cross-sectional overhead view of a second embodiment of a chemical feed distributor in accordance with one or more embodiments of the present disclosure;

FIG. 1D is a schematic illustration of a cross-sectional overhead view of a third embodiment of a chemical feed distributor in accordance with one or more embodiments of the present disclosure;

FIG. 1E is a schematic illustration of a cross-sectional view of chemical feed outlets of a chemical feed distributor in accordance with one or more embodiments of the present disclosure;

FIG. 2 is a schematic cutaway view of a vessel in accordance with one or more embodiments of the present disclosure;

FIG. 3A is a schematic illustration of a model of the circumferential maximum surface temperature of the chemical feed distributor with feed recirculation in accordance with one or more embodiments of the present disclosure;

FIG. 3B is a schematic illustration of a model of the circumferential maximum surface temperature of the chemical feed distributor without feed recirculation in accordance with one or more embodiments of the present disclosure;

FIG. 4 is a graphical depiction of the peak temperature of a wall of a chemical feed distributor exposed to a chemical feed as a function of distance along the chemical feed distributor in accordance with one or more embodiments of the present disclosure; and

FIG. 5 is a graphical depiction of the normalized flow rate per nozzle as a function of nozzle distance from inlet along the chemical feed distributor in accordance with one or more embodiments of the present disclosure.

Reference will now be made in greater detail to various embodiments, some embodiments of which are illustrated in the accompanying drawings. Whenever possible, the same reference numerals will be used throughout the drawings to refer to the same or similar parts.

## DETAILED DESCRIPTION

The present disclosure is directed, according to one or more embodiments described herein, towards chemical feed distributors and methods for using such. Generally, the chemical feed distributors described herein may comprise a chemical feed inlet, a body comprising one or more walls, a plurality of primary chemical feed outlets, and a secondary feed outlet. A chemical feed stream may be passed through the chemical feed inlet. The chemical feed steam, as described herein, generally includes only a first portion and a second portion, which are equivalent in composition. A first portion of the chemical feed stream may be passed out of the plurality of primary chemical feed outlets, and the second portion may be passed out of the secondary chemical feed outlet.

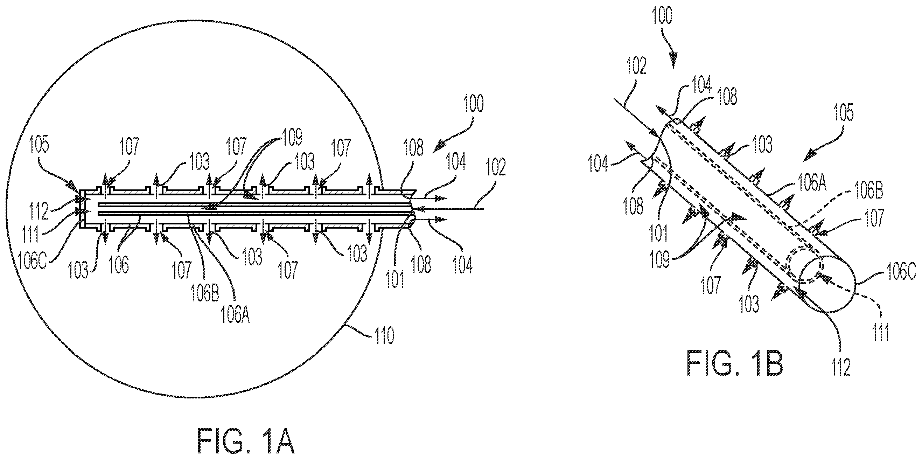

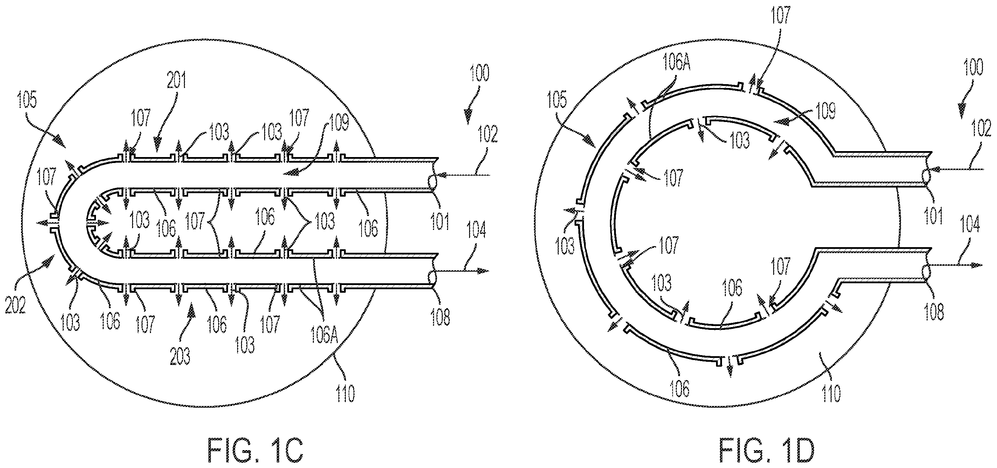

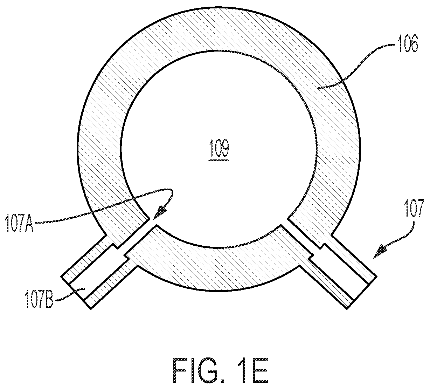

Numerous embodiments of chemical feed distributors are described with respect to the appended drawings. However, as presently described, these embodiments may share common themes such as the passing of the chemical feed stream through primary and secondary chemical feed stream outlets. For example, FIGS. 1A, 1B, 1C, and 1D each depict embodiments that similarly include primary and secondary chemical feed outlets.

Referring now to FIGS. 1A, 1B, 1C, and 1D, according to one or more embodiments, the chemical feed distributor 100 may comprise a chemical feed inlet 101. The chemical feed inlet 101 may pass a chemical feed stream 102 into the chemical feed distributor 100. Accordingly, the chemical feed stream 102 may pass through the chemical feed inlet 101 into the chemical feed distributor 100. As described herein, the chemical feed inlet 101 may refer to a place of entry in a vessel 110 that allows the chemical feed distributor 100 and the chemical feed stream 102 within the chemical feed distributor 100 to pass into the vessel 110.

The chemical feed distributor 100 may comprise a body 105. The body 105 may comprise one or more walls 106. The body 105 may also comprise a plurality of primary chemical feed outlets 107. As described herein, the plurality of primary chemical feed outlets 107 may be openings in the or more walls 106 of the body 105 and may provide a passage for the chemical feed stream 102 from the chemical feed distributor 100 to the vessel 110. In embodiments, the plurality of chemical feed outlets 107 may be arrange in a singular row along the chemical feed distributor. In other embodiments, as shown in FIG. 1B, the plurality of chemical feed outlets 107 may be arrange in an alternating position along the chemical feed distributor 100, such as two rows. It is contemplated that the chemical feed outlets 107 may be arrange in any configuration along the chemical feed distributor 100. The plurality of chemical feed outlets 107 may comprise orifices 107A at the start of each chemical feed outlet 107 to create pressure drop and create more even distribution. The plurality of chemical feed outlets 107 may also comprise diffusers 107B to slow the superficial gas velocity passing through the plurality of chemical feed outlets 107 so as not to cause catalyst attrition or chemical feed distributor 100 damage. The diffusers 107B may permit the gas velocity to be in a range from 50 feet per second (ft/sec) (15.24 metres per second) to 300 ft/sec (91.44 metres per second).

The one or more walls 106 may define an elongated chemical feed stream flow path 109. The plurality of primary chemical feed outlets 107 may be spaced along at least a portion of the length of the elongated chemical feed stream flow path 109. The plurality of primary chemical feed outlets 107 may be operable to pass the first portion 103 of the chemical feed stream 102 out of the chemical feed distributor 100 and into a vessel 110. A secondary chemical feed outlet 108 may be downstream of the plurality of primary chemical feed outlets 107. The secondary chemical feed outlet 108 may be operable to pass the second portion 104 of the chemical feed stream 102 out of the chemical feed distributor 100. The second portion 104 of the chemical feed stream 102 may be passed through the chemical feed distributor 100 and may not enter the vessel 110. As used herein, the secondary chemical feed outlet 108 may refer to a place of exit in the vessel 110 that allows the chemical feed distributor 100 and any remaining portion of the chemical feed stream 102 within the chemical feed distributor 100 to pass out of the vessel 110. The remaining portion of the chemical feed stream 102 that may pass through the secondary chemical feed outlet 108 may correspond to the portion of the chemical feed stream 102 that is not passed from the chemical feed distributor 100 to the vessel 110 via the plurality of primary chemical feed outlets 107.

During operation, the chemical feed stream 102 may be fed at a relatively cool temperature compared to the temperature inside the vessel 110. According to one or more embodiments, the differential between the temperature of the chemical feed stream 102 and the temperature inside the vessel 110 may greater than 300 °C, such as greater than 350 °C, greater than 400 °C, greater than 450 °C, greater than 500 °C, greater than 550 °C, greater than 600 °C, or greater than 650 °C. In embodiments, the temperature inside the vessel 110 may be greater than 500 °C and the temperature of the chemical feed stream 102 may be lower than the temperature inside the vessel. During operation, the temperature inside the vessel 110 may begin to heat the chemical feed distributor 100 and, therefore, may elevate the circumferential maximum surface temperature of the chemical feed distributor 100. Circumferential maximum surface temperature may refer to the highest surface temperature throughout the chemical feed distributor 100. This may also elevate the temperature of the chemical feed stream 102 within the chemical feed distributor 100. If the circumferential maximum surface temperature of the chemical feed distributor 100 or the temperature of the chemical feed stream 102 inside the chemical feed distributor 100 increases too much, the chemical feed stream 102 may begin to deposit coke on the chemical feed distributor 100. When coke deposits on the chemical feed distributor 100, plugging may begin at the plurality of primary chemical feed outlets 107, which could result in flow maldistribution, which may result in operational issues. As used in the present disclosure, "flow maldistribution" may refer to differences in uniform flow distribution between the plurality of primary chemical feed outlets 107.

According to one or more embodiments of the present disclosure, the secondary chemical feed outlet 108 may be downstream of the plurality of primary chemical feed outlets 107. The secondary chemical feed outlet 108 may be operable to pass the second portion 104 of the chemical feed stream 102 out of the chemical feed distributor 100. Passing the second portion 104 of the chemical feed stream 102 out of the chemical feed distributor 100 may decrease the risk of coking, and, in turn, the risk of plugging and flow maldistribution. Without being bound to any particular theory, the total flow rate of the chemical feed stream 102 in the chemical feed distributor 100 may be increased as the second portion 104 of the chemical feed stream 102 is passed out of the chemical feed distributor 100 and not actually entering the vessel 110. This increased flow rate of the chemical feed stream 102 may not substantially effect the flow rate of chemical feed stream 102 entering the vessel 110, as the first portion 103 of the chemical feed stream 102, may remain the same as if there was no recirculation of the second portion 104 of the chemical feed stream 102. Without being bound to any particular theory, this increased flow rate of the chemical feed stream 102 may reduce stagnation in the chemical feed distributor 100. This reduction in stagnation may result in maintaining a desirable Reynolds number where the chemical feed stream 102 within the chemical feed distributor 100 is rapidly moving through the chemical feed distributor 100. With an increased flow of the chemical feed stream 102 within the chemical feed distributor 100, the circumferential maximum surface temperature of the chemical feed distributor 100 may remain low enough such that coking may be minimized. That is, this desirable Reynolds number may effectively minimize coking, and, in turn, plugging of the plurality of primary chemical feed outlets 107 and flow maldistribution.

As used in this disclosure, a "chemical feed" may refer to any process feed stream or fuel gas, such as, but not limited to, methane, natural gas, ethane, propane, hydrogen, or any gas that comprises energy value upon combustion. Additionally, as used in this disclosure, a "vessel" may refer to a hollow container for holding a gas or solids, such as, a reactor or combustor in which one or more chemical reactions may occur between one or more reactants optionally in the presence of one or more catalysts. The vessel may have a solid particle volume fraction up to 55 vol.% and the superficial velocity of the gas in the vessel may be higher than the minimum fluidization velocity of the solid particles.

As used in this disclosure, the terms "upstream" and "downstream" may refer to the relative positioning of elements with respect to the direction of flow of the process streams. A first element of a system may be considered "upstream" of a second element if process streams flowing through the system encounter the first element before encountering the second element. Likewise, a second element may be considered "downstream" of the first element if the process streams flowing through the system encounter the first element before encountering the second element.

Additionally, as used in the present disclosure "coking" may refer to the formation of carbonaceous deposits, or coke. "Plugging" may refer to an accumulation of coke such that a passage or port may be partially restricted or completely blocked.

Referring to FIGS. 1A and 1B, in some embodiments, the one or more walls 106 may define an upstream fluid passage 111 and a downstream fluid passage 112 of the elongated chemical feed stream flow path 109. The upstream fluid passage 111 may be in fluid communication with the chemical feed inlet 101. The upstream fluid passage 111 may be in fluid communication with the downstream fluid passage 112. The downstream fluid passage 112 may be in fluid communication with the plurality of primary chemical feed outlets 107 and with the secondary chemical feed outlet 108.

According to one or more embodiments, the upstream fluid passage 111 may be separated from the downstream fluid passage 112 by one or more walls 106. A first wall 106A may define the upstream fluid passage 111. A second wall 106B, in conjunction with the first wall 106A, may define the downstream fluid passage 112. A third wall 106C may serve as an end of the chemical feed distributor 100. The third wall 106C may be perpendicular to the first wall 106A and second wall 106B. It is contemplated that the third wall 106C may also comprise other geometries. The third wall 106C may be linear, rounded, or pointed. For the upstream fluid passage 111 to be in fluid communication with the downstream fluid passage 112, the body 105 of the chemical feed distributor 100 may comprise a void between the end of the first wall 106A and the third wall 106C. The void between the end of the first wall 106A and the third wall 106C may allow the chemical feed stream 102 to fluidly pass from the upstream fluid passage 111 to the downstream fluid passage 112.

According to one or more embodiments, the downstream fluid passage 112 may surround the upstream fluid passage 111. In some embodiments, the downstream fluid passage 112 may be completely surrounded by the upstream fluid passage 111. In other embodiments, a wall 106 of the downstream fluid passage 112 may be in contact with a wall 106 of the upstream fluid passage 111, such that the downstream fluid passage 112 does not completely surround the upstream fluid passage 111. The downstream fluid passage 112 and upstream fluid passage 111 may comprise any combination of various geometries. For example, the upstream fluid passage 111 may comprise a cylindrical or rectangular shape. The downstream fluid passage 112 may comprise a cylindrical shell or rectangular shell shape surrounding the cylindrical shape. The downstream fluid passage 112 may comprise a shell (*i.e.,* a hollow geometry) as the downstream fluid passage 112 may partially or completely surround the upstream fluid passage 111. Similarly, the upstream fluid passage 111 may, for example, comprise a circular, rectangular, or trapezoidal cross-sectional shape. The downstream fluid passage 112 may comprise a circular shell, rectangular shell, or trapezoidal shell cross-sectional shape. It is contemplated that, in embodiments, the downstream fluid passage 112 may not necessarily comprise a shell or hollow geometry. In embodiments, the downstream fluid passage 112 may not surround the upstream fluid passage 111. Thus, in embodiments, the downstream fluid passage 112 may comprise a cylindrical, rectangular, circular, or trapezoidal shape.

According to one or more embodiments, the upstream fluid passage 111 and the downstream fluid passage 112 may form a co-axial geometry. In other embodiments, the upstream fluid passage 111 and the downstream fluid passage 112 may form an off-center geometry. Said differently, the upstream fluid passage 111 and the downstream fluid passage 112 may be concentric or eccentric. According to one or more embodiments, the upstream fluid passage 111 may be hermetic. That is, the upstream fluid passage 111 may be airtight such that the upstream fluid passage 111 does not combine with the downstream fluid passage 112 until the point of where the upstream fluid passage 111 is in fluid communication with the downstream fluid passage 112.

Referring to FIG. 1C, according to one or more embodiments, the body 105 may consist of a tube. As previously discussed, the body 105 may be defined by one or more walls 106. The one or more walls 106 may define a first straight tube segment 120, a connector tube segment 121, and a second straight tube segment 122. The first straight tube segment 120 may be connected to the chemical feed inlet 101. The first straight tube segment 120 may also be connected to the connector tube segment 121. The connector tube segment 121 may be connected to the first straight tube segment 120 and the second straight tube segment 122. The second straight tube segment 122 may be connected to the secondary chemical feed outlet 108. Together, the first straight tube segment 120, the connector tube segment 121, and the second straight tube segment 122 may define the elongated chemical feed stream flow path 109. The chemical feed stream 102 may enter the first straight tube segment 120 through the chemical feed inlet 101. The chemical feed stream 102 may pass through the first straight tube segment 120, the connector tube segment 121, and the second straight tube segment 122. The first portion 103 of the chemical feed stream 102 may enter the vessel 110 through the plurality of primary chemical feed outlets 107. As previously discussed, the plurality of primary chemical feed outlets 107 may be spaced along the length of the elongated chemical feed stream flow path 109. The second portion 104 of the chemical feed stream 102 may remain in the chemical feed distributor 100, such that it does not pass into the vessel 110. The second portion 104 of the chemical feed stream 102 may exit the chemical feed distributor 100 via the secondary chemical feed outlet 108.

According to one or more embodiments, the first straight tube segment 120 and the second straight tube segment 122 may be substantially parallel. In some embodiments, the connector tube segment 121 may be U-shaped (such that the connector tube segment 121 comprises a 180° bend). In such an embodiment, the first straight tube segment 120 and the second straight tube segment 122 may be parallel. It is contemplated that, in some embodiments, a plurality of connector tube segments 121 may be used such that the chemical feed distributor 100 comprises a plurality of first straight tube segments 120 and a plurality of second straight tube segments 122 between the chemical feed inlet 101 and secondary chemical feed outlet 108.

Referring to FIG. 1D, according to one or more embodiments, the body 105 may be shaped to have a contour which substantially follows the vessel 110 perimeter. In some embodiments, the vessel 110 may be substantially circular. Accordingly, the body 105 may comprise a circular or ring shape. The first wall 106A may define the elongated chemical feed stream flow path 109. The first wall 106A may comprise a plurality of primary chemical feed outlets 107, as previously detailed herein. As previously described with respect to FIG. 1A, 1B, and 1C, the chemical feed stream 102 may enter the chemical feed distributor 100 via the chemical feed inlet 101. The chemical feed stream 102 may travel along the elongated chemical feed stream flow path 109 of the chemical feed distributor 100. The first portion 103 of the chemical feed stream 102 may enter the vessel 110 through the plurality of primary chemical feed outlets 107. The second portion 104 of the chemical feed stream 102 may remain in the chemical feed distributor 100, such that it does not pass into the vessel 110. The second portion 104 of the chemical feed stream 102 may exit the chemical feed distributor 100 via the secondary chemical feed outlet 108.

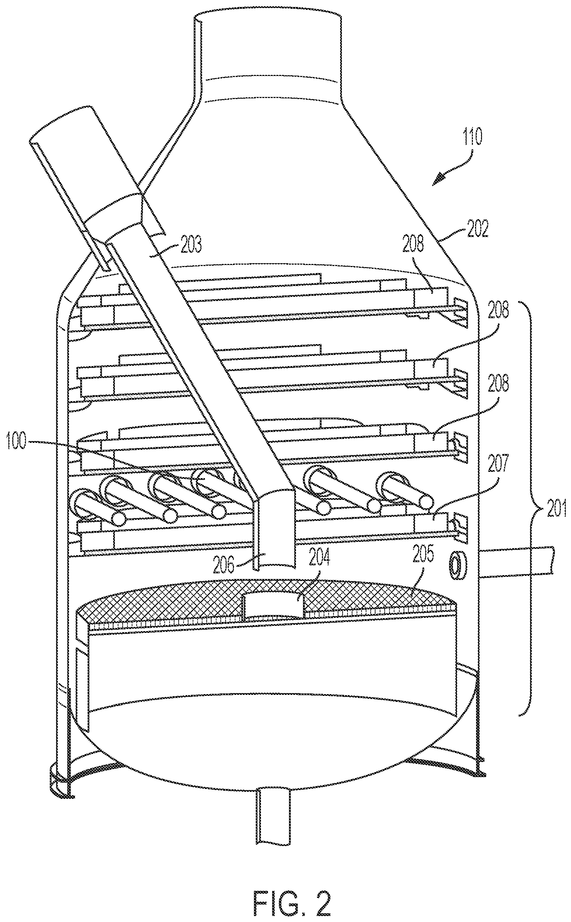

Referring to FIG. 2, a schematic cutaway view of an embodiment of a vessel 110 is shown. FIG. 2 shows a vessel 110 used as a fluidized fuel gas combustor system for a catalytic dehydrogenation process. However, as detailed herein, the chemical feed distributor 100 may be employed in a variety of vessels 110. Referring again to FIG. 2, the vessel 110 may include a lower portion 201 generally in the shape of a cylinder and an upper portion comprising a frustum 202. The angle between the frustum 202 and an internal horizontal imaginary line drawn at the intersection of the frustum 202 and the lower portion 201 may range from 10 to 80 degrees. All individual values and subranges from 10 to 80 degrees are included and disclosed herein; for example the angle between the tubular and frustum 202 components can range from a lower limit of 10, 40 or 60 degrees to an upper limit of 30, 50, 70 or 80 degrees. For example, the angle can be from 10 to 80 degrees, or in the alternative, from 30 to 60 degrees, or in the alternative, from 10 to 50 degrees, or in the alternative, from 40 to 80 degrees. Furthermore, in alternative embodiments, the angle can change along the height of the frustum 202, either continuously or discontinuously. In some embodiments, the vessel 110 may be, or may not be, lined with a refractory material.

Spent or partially deactivated catalyst may enter the vessel 110 through downcomer 203. In alternative configurations, the spent or partially deactivated catalyst may enter the vessel 110 from a side inlet or from a bottom feed, passing upward through the air distributor as described in U.S. Patent 9,370,759 B2 (Attorney Ref. DOW 72935). The used catalyst impinges upon and is distributed by splash guard 204. The vessel 110 may further includes air distributors 205 which are located at or slightly below the height of the splash guard 204. Above the air distributors 205 and the outlet 206 of downcomer 203 may be a grid 207. Above the grid 207 may be a plurality of chemical feed distributors 100. One or more additional grids 208 may be positioned within the vessel 110 above the chemical feed distributors 100. In embodiments, the chemical feed distributors 100 may enter the vessel 110 and traverse substantially across the vessel 110 as described in U.S. Patent Application No. 14/868,507 (Attorney Ref. DOW 77770).

As previously described herein, according to one or more embodiments, the method for distributing the chemical feed stream 102 may comprise passing the chemical feed stream 102 through the chemical feed inlet 101 into the chemical feed distributor 100. The chemical feed stream 102 may consist of the first portion 103 and the second portion 104. The method may also comprise passing the first portion 103 of the chemical feed stream 102 out of the chemical feed distributor 100. The first portion 103 of the chemical feed stream 102 may pass through the plurality of primary chemical feed outlets 107 and into the vessel 110. The method may further comprise passing the second portion 104 of the chemical feed stream 102 out of the chemical feed distributor 100 through the secondary chemical feed outlet 108. As previously described herein, the secondary chemical feed outlet 108 may be downstream of the plurality of primary chemical feed outlets 107. Accordingly, the second portion 104 of the chemical feed stream 102 may not enter the vessel 110.

According to another embodiment, the method for distributing the chemical feed stream 102 may comprise passing the chemical feed stream 102 through the chemical feed inlet 101 into the chemical feed distributor 100. Again, the chemical feed stream 102 may consist of the first portion 103 and the second portion 104. The chemical feed distributor 100 may comprise a body 105 comprising one or more walls 106. The one or more walls 106 may define the elongated chemical feed stream flow path 109 and the plurality of primary chemical feed outlets 107. The plurality of primary chemical feed outlets 107 may be spaced along at least a portion of the length of the elongated chemical feed stream flow path 109. The method may also comprise passing the first portion 103 of the chemical feed stream 102 along the elongated chemical feed stream flow path 109. The first portion 103 of the chemical feed stream 102 may pass through the plurality of primary chemical feed outlets 107 out of the chemical feed distributor 100 and into the vessel 110. The method may further comprise passing the second portion 104 of the chemical feed stream 102 out of the chemical feed distributor 100 through the secondary chemical feed outlet 108. The second portion 104 of the chemical feed stream 102 may be passed through the chemical feed distributor 100 and may not enter the vessel 110.

According to some embodiments, the flow rates of the chemical feed stream 102, the first portion 103 of the chemical feed stream 102, and the second portion 104 of the chemical feed stream 102 may be represented by a series of expressions. The flow rate of the chemical feed stream 102, $C_i$, may be represented by Equation 1. The flow rate of the first portion 103 of the chemical feed stream 102, $C_1$, may be represented by Equation 2. The flow rate of the second portion 104 of the chemical feed stream 102, $C_2$, may be represented by Equation 3, as shown below:

$$C_i = (1 + r)X \qquad \text{(Equation 1)}$$

$$C_1 = X \qquad \text{(Equation 2)}$$

$$C_2 = rX \qquad \text{(Equation 3)}$$

In Equations 1, 2, and 3, as shown above, r is the ratio of the flow rate of the second portion 104 of the chemical feed stream 102 to the flow rate of the first portion 103 of the chemical feed stream 102 and X is the nominal flow rate (that is, the flow rate of the portion of the chemical feed stream 102 (the first portion 103) that passes out of the chemical feed distributor 100 and into the vessel 110).

In embodiments, the ratio of the flow rate of the second portion 104 of the chemical feed stream 102 to the flow rate of the first portion 103 of the chemical feed stream 102 may be from 0.1 to 3.0. For example, the ratio of the flow rate of the second portion 104 of the chemical feed stream 102 to the flow rate of the first portion 103 of the chemical feed stream 102 may be from 0.1 to 0.5, from 0.1 to 1.0, from 0.1 to 1.5, from 0.1 to 2.0, from 0.1 to 2.5, from 0.5 to 1.0, from 0.5 to 1.5, from 0.5 to 2.0, from 0.5 to 2.5, from 0.5 to 3.0, from 1.0 to 1.5, from 1.0 to 2.0, from 1.0 to 2.5, from 1.0 to 3.0, from 1.5 to 2.0, from 1.5 to 2.5, from 1.5 to 3.0, from 2.0 to 2.5, from 2.0 to 3.0, or from 2.5 to 3.0.

In some embodiments, the ratio of the flow rate of the second portion 104 of the chemical feed stream 102 to the flow rate of the first portion 103 of the chemical feed stream 102 may be from 0.5 to 1.5. For example, the ratio of the flow rate of the second portion 104 of the chemical feed stream 102 to the flow rate of the first portion 103 of the chemical feed stream 102 may be from 0.5 to 0.7, from 0.5 to 0.9, from 0.5 to 1.1, from 0.5 to 1.3, from 0.7 to 0.9, from 0.7 to 1.1, from 0.7 to 1.3, from 0.7 to 1.5, from 0.9 to 1.1, from 0.9 to 1.3, from 0.9 to 1.5, from 1.1 to 1.3, from 1.1 to 1.5, or from 1.3 to 1.5.

According to one or more embodiments, the method may further comprise recycling the second portion 104 of the chemical feed stream 102. The second portion 104 of the chemical feed stream 102 that passes out of the chemical feed distributor 100 may be combined with the chemical feed stream 102 prior to the chemical feed stream 102 passing through the chemical feed inlet 101.

According to one or more embodiments, the temperature inside the vessel 110 may be greater than 650 °C and the circumferential maximum surface temperature of the chemical feed distributor 100 may not exceed the temperature inside the vessel 100. In other embodiments, the temperature inside the vessel 110 may be greater than 650 °C and the circumferential maximum surface temperature of the chemical feed distributor 100 may not exceed 650 °C.

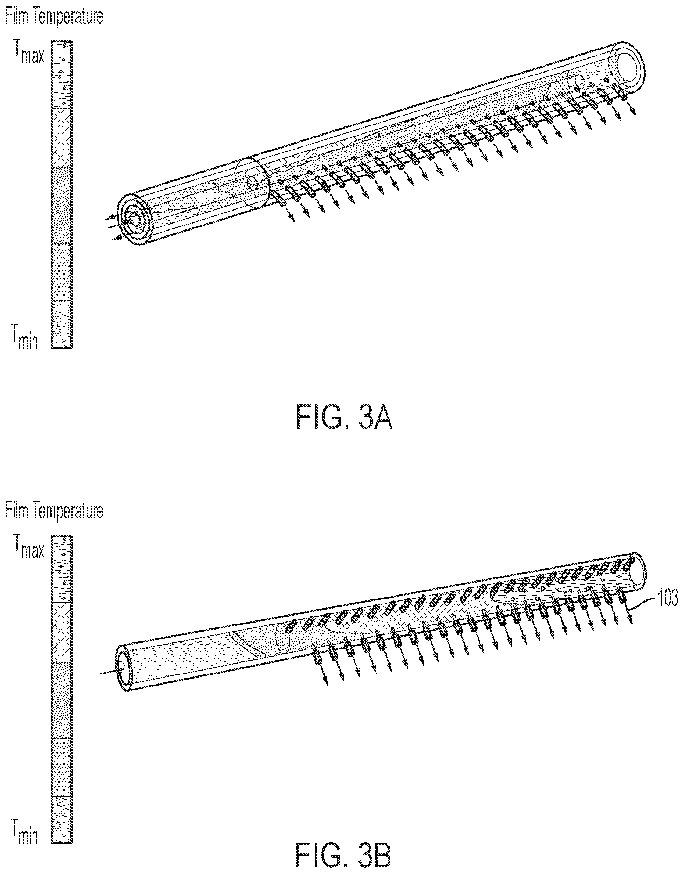

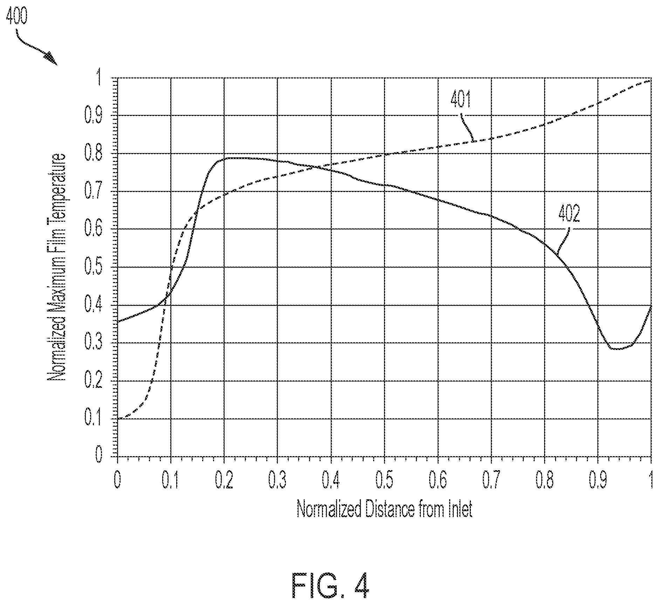

As further discussed below, FIG. 3A, 3B, and 4 further demonstrate the circumferential maximum surface temperature and peak surface temperature of the chemical feed distributor 100 according to embodiments described herein.

As previously described herein, the chemical feed distributor 100 of the embodiments herein may reduce the risk of coking. As coking may create a risk of plugging and flow maldistribution, the chemical feed distributor 100 of the embodiments herein may reduce the risk of plugging and flow maldistribution. Flow maldistribution may also be caused by the heating up of the chemical feed stream 102 within the chemical feed distributor 100, which may be referred to as thermally-induced flow maldistribution. As the temperature of the chemical feed stream 102 within the chemical feed distributor 100 increases, the density of the chemical feed stream 102 may decrease. Mass flow rate is proportional to the square root of the gas density. If the density of the chemical feed stream 102 decreases along a length of the chemical feed distributor 100, the mass flow rate may also decrease along the length of the chemical feed distributor 100. However, according to one or more embodiments of the present disclosure, the temperature increase of the chemical feed stream 102 may be lower, which in turn decreases any change in the density of the chemical feed stream 102. Therefore, the thermally-induced flow maldistribution may be decreased.

In embodiments of the present disclosure, the relative reduction in flow maldistribution (including thermally-induced flow maldistribution) may be less than ± 15.0%, such as less than ± 14.5%, less than ± 14.0%, less than ± 13.5%, less than ± 13.0%, less than ± 12.5%, less than ± 12.0%, less than ± 11.5%, less than ± 11.0%, less than ± 10.5%, less than 10.0%, less than ± 9.5%, less than ± 9.0%, less than ± 8.5%, less than ± 8.0%, less than ± 7.5%, less than ± 7.0%, less than ± 6.5%, less than ± 6.0%, less than ± 5.5%, less than ± 5.0%, less than ± 4.5%, less than ± 4.0%, less than ± 3.5%, less than ± 3.0%, or less than ± 3.0%. Flow maldistribution may be determined using a computational fluid dynamics (CFD) program ANSYS Fluent® which can numerically predict the 3D compressible flow and conjugated heat transfer in the system following the first principle mass, momentum and energy conservation laws. The flow maldistribution is simply the deviation from a perfect average mass distribution at various points along the distributor.

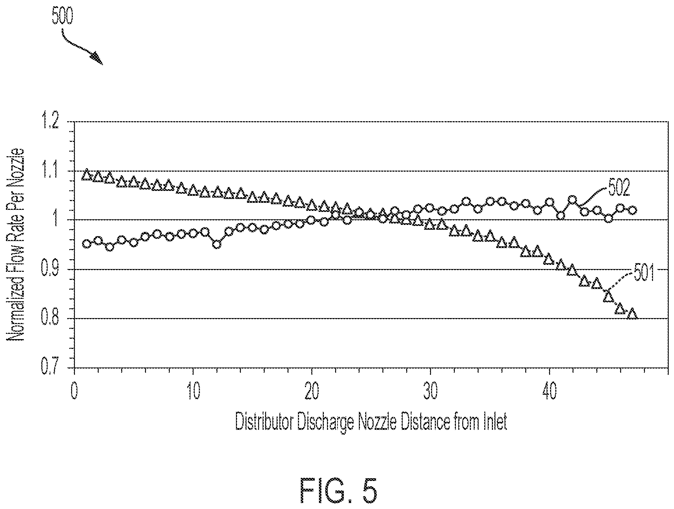

As shown in FIG. 5, the embodiments of the present disclosure, where a second portion 104 of the chemical feed stream 102 is passed out of the chemical feed distributor 100, demonstrate a decreased flow maldistribution as compared to an embodiment where a second portion 104 of the chemical feed stream 102 is not passed out of the chemical feed distributor 100. In fact, the flow maldistribution of the present embodiments may be less than ± 7.5%. Conversely, the flow maldistribution of an embodiment where a second portion 104 of the chemical feed stream 102 is not passed out of the chemical feed distributor 100 may be as high as ± 30.0%, as shown in FIG. 5.

**EXAMPLES**

The various embodiments of systems and processes for distributing a chemical feed through a chemical feed distributor will be further clarified by the following examples. The examples are illustrative in nature, and should not be understood to limit the subject matter of the present disclosure.

_Example 1: Effect of Feed Recirculation_

In Example 1, a computational fluid dynamic (CFD) model was used to compare a chemical feed distributor with feed recirculation to a chemical feed distributor without feed recirculation. A gas stream comprising methane, ethylene, and propylene was fed into the chemical feed distributors at 52 °C. The chemical feed distributors then directed the gas stream into a fluidized bed reactor operating at 730 °C. Both chemical feed distributors have the same gas stream flow rate. However, in the chemical feed distributor with feed recirculation, half of the gas stream was allowed to enter the fluidized bed reactor, while the remaining half of the gas stream was passed through the entirety of the chemical feed distributor and recirculated.

As shown in FIG. 3 and 4, an embodiment according the present disclosure where a second portion of the chemical feed stream is passed out of the chemical feed distributor (FIG. 3A) is compared with an embodiment where a second portion of the chemical feed stream is not passed out of the chemical feed distributor (FIG. 3B). The peak surface temperatures of the feed stream at each of the chemical feed distributors internal wall surfaces were obtained from the CFD model. Compared to the chemical feed distributor without feed recirculation, the chemical feed distributor with feed recirculation demonstrates a lower peak surface temperature. As seen in FIG. 4, a distal end (the end opposite the chemical feed inlet) of the chemical feed distributor without feed recirculation is much hotter than that of the chemical feed distributor where a second portion of the chemical feed stream is passed out of the chemical feed distributor. FIG. 4 demonstrates a much more uniform temperature across the length of the chemical feed distributor where a second portion of the chemical feed stream is passed out of the chemical feed distributor (402), as compared to a chemical feed distributor where a second portion of the chemical feed stream is not passed out of the chemical feed distributor (401). Further, FIG. 4 demonstrates that the peak surface temperature that does not reach temperatures as high as an embodiment where a second portion of the chemical feed stream is not passed out of the chemical feed distributor (401). This lower peak surface temperature may be due to the second portion of the chemical feed stream that passes out of the chemical feed distributor. It will be apparent to those skilled in the art that the peak surface temperature may be adjusted based on the process needs by tuning the feed recirculation rate to reduce the risk of coking.

Additionally, as shown in FIG. 5, in embodiments of the present disclosure, the flow rate per primary chemical feed outlet across the chemical feed distributor is much more stable. That is, when a second portion of the chemical feed stream is passed out of the chemical feed distributor (502) when a second portion of the chemical feed stream is not passed out of the chemical feed distributor (501). As previously described herein, this may be attributable to the reduced flow maldistribution.

**Claims**

1. Apparatus comprising a vessel (110) and a chemical feed distributor (100) passing therein, the chemical feed distributor (100) comprising:

   a chemical feed inlet (101) that passes a chemical feed stream (102) into the chemical feed distributor (100), the chemical feed stream (102) consisting of a first portion (103) and a second portion (104);
   a body (105) comprising one or more walls (106) and a plurality of primary chemical feed outlets (107), wherein the one or more walls (106) define an elongated chemical feed stream flow path (109), wherein the plurality of primary chemical feed outlets (107) are spaced along at least a portion of the length of the elongated chemical feed stream flow path (109), and wherein the plurality of primary chemical feed outlets (107) are arranged to pass the first portion (103) of the chemical feed stream (102) out of the feed distributor (100) and into the vessel (110); and
   a secondary chemical feed outlet (108) downstream of the plurality of primary chemical feed outlets (107), wherein the secondary chemical feed outlet (108) is arranged to pass the second portion (104) of the chemical feed stream (102) out of the chemical feed distributor (100) such that the second portion (104) of the chemical feed stream (102) is passed through the chemical feed distributor (100) and does not enter the vessel (110).

2. The apparatus of claim 1, wherein:

   the one or more walls (106) define an upstream fluid passage (111) and a downstream fluid passage (112) of the elongated chemical feed stream flow path (109);
   the upstream fluid passage (111) is in fluid communication with the chemical feed inlet (101);
   the upstream fluid passage (111) is in fluid communication with the downstream fluid passage (112); and
   the downstream fluid passage (112) is in fluid communication with the plurality of primary chemical feed outlets (107) and with the secondary chemical feed outlet (108).

3. The apparatus of claim 2, wherein the upstream fluid passage (111) is separated from the downstream fluid passage (112) by one or more walls (106).

4. The apparatus of claims 2 or 3, wherein the downstream fluid passage (112) surrounds the upstream fluid passage (111).

5. The apparatus of any of claims 2 to 4, wherein the upstream fluid passage (111) comprises a cylindrical shape, and the downstream fluid passage (112) comprises a cylindrical shell shape surrounding the cylindrical shape.

6. The apparatus of any of claims 2 to 5, wherein the upstream fluid passage (111) and the downstream fluid passage (112) form a co-axial geometry.

7. The apparatus of any of claims 2 to 6, wherein the upstream fluid passage (111) does not combine with the downstream fluid passage (112) until the point of where the upstream fluid passage (111) is in fluid communication with the downstream fluid passage (112).

8. The apparatus of claim 1, wherein the body (105) consists of a tube.

9. The apparatus of claim 8, wherein the body (105) comprises a first straight tube segment (120), a connector tube segment (121), and a second straight tube segment (122), wherein the first straight tube segment (120) is connected to the connector tube segment (121), the connector tube segment (121) is connected to the second straight tube segment (122), and the first straight tube segment (120) and the second straight tube segment (122) are substantially parallel.

10. The apparatus of claim 1, wherein the body (105) is shaped to have a contour which substantially follows the vessel (110) perimeter.

11. A method for distributing a chemical feed stream (102), the method comprising:

    passing a chemical feed stream (102) through a chemical feed inlet (101) into a chemical feed distributor (100), the chemical feed stream (102) consisting of a first portion (103) and a second portion (104);
    passing the first portion (103) of the chemical feed stream (102) out of the chemical feed distributor (100) through a plurality of primary chemical feed outlets (107) and into a vessel (110); and
    passing the second portion (104) of the chemical feed stream (102) out of the chemical feed distributor (100) through a secondary chemical feed outlet (108) downstream of the plurality of primary chemical feed outlets (107) such that the second portion (104) of the chemical feed stream (102) does not enter the vessel (110).

12. The method of claim 11, wherein the chemical feed distributor (100) comprises a body (105) comprising one or more walls (106) defining an elongated chemical feed stream flow path (109) and a plurality of primary chemical feed outlets (107) spaced along at least a portion of the length of the elongated chemical feed stream flow path (109).

13. The method of claim 11 or 12, wherein the ratio of a flow rate of the second portion (104) of the chemical feed stream (102) to the flow rate of the first portion (103) of the chemical feed stream (102) is from 0.1 to 3.0.

14. The method of claim 11 or 12, further comprising recycling the second portion (104) of the feed stream (102) such that the second portion (104) of the chemical feed stream (102) that passes out of the chemical feed distributor (100) is combined with the chemical feed stream (102) prior to the chemical feed stream (102) passing through the chemical feed inlet (101).

15. The method of claim 11 or 12, wherein the temperature inside the vessel (110) is greater than 650 °C and the circumferential maximum surface temperature of the chemical feed distributor (100) does not exceed 650 °C.

**Patentansprüche**

1. Einrichtung, umfassend einen Behälter (110) und einen darin verlaufenden Chemikalienzufuhrverteiler (100), wobei der Chemikalienzufuhrverteiler (100) umfasst:

   einen Chemikalienzufuhreinlass (101), der einen Chemikalienzufuhrstrom (102) in den Chemikalienzufuhrverteiler (100) leitet, wobei der Chemikalienzufuhrstrom (102) aus einem ersten Anteil (103) und einem zweiten Anteil (104) besteht;
   ein Gehäuse (105), das eine oder mehrere Wände (106) und eine Vielzahl von primären Chemikalienzufuhrauslässen (107) umfasst, wobei die eine Wand oder die mehreren Wände (106) einen langgestreckten Chemikalienzufuhrstrom-Strömungsweg (109) definieren, wobei die Vielzahl von primären Chemikalienzufuhrauslässen (107) entlang zumindest eines Anteils der Länge des langgestreckten Chemikalienzufuhrstrom-Strömungswegs (109) beabstandet ist, und wobei die Vielzahl von primären Chemikalienzufuhrauslässen (107) so angeordnet ist, dass sie den ersten Anteil (103) des Chemikalienzufuhrstroms (102) aus dem Zufuhrverteiler (100) heraus und in den Behälter (110) hinein leitet; und
   einen sekundären Chemikalienzufuhrauslass (108), der der Vielzahl von primären Chemikalienzufuhrauslässen (107) nachgelagert ist, wobei der sekundäre Chemikalienzufuhrauslass (108) so angeordnet ist, dass der zweite Anteil (104) des Chemikalienzufuhrstroms (102) aus dem Chemikalienzufuhrverteiler (100) herausgeleitet wird, derart, dass der zweite Anteil (104) des Chemikalienzufuhrstroms (102) durch den Chemikalienzufuhrverteiler (100) geleitet wird und nicht in den Behälter (110) gelangt.

2. Einrichtung nach Anspruch 1, wobei:

   die eine oder die mehreren Wände (106) einen vorgelagerten Fluidkanal (111) und einen nachgelagerten Fluidkanal (112) des langgestreckten Strömungswegs (109) für den Chemikalienzufuhrstrom definieren;
   der vorgelagerte Fluidkanal (111) mit dem Chemikalienzufuhreinlass (101) in Fluidverbindung steht;
   der vorgelagerte Fluidkanal (111) mit dem nachgelagerten Fluidkanal (112) in Fluidverbindung steht; und
   der nachgelagerte Fluidkanal (112) mit der Vielzahl von primären Chemikalienzufuhrauslässen (107) und mit dem sekundären Chemikalienzufuhrauslass (108) in Fluidverbindung steht.

3. Einrichtung nach Anspruch 2, wobei der vorgelagerte Fluidkanal (111) vom nachgelagerten Fluidkanal (112) durch eine oder mehrere Wände (106) getrennt ist.

4. Einrichtung nach Anspruch 2 oder 3, wobei der nachgelagerte Fluidkanal (112) den vorgelagerten Fluidkanal (111) umgibt.

5. Einrichtung nach einem der Ansprüche 2 bis 4, wobei der vorgelagerte Fluidkanal (111) eine zylindrische Form aufweist und der nachgelagerte Fluidkanal (112) eine zylindrische Schalenform aufweist, die die zylindrische Form umgibt.

6. Einrichtung nach einem der Ansprüche 2 bis 5, wobei der vorgelagerte Fluidkanal (111) und der nachgelagerte Fluidkanal (112) eine koaxiale Geometrie bilden.

7. Einrichtung nach einem der Ansprüche 2 bis 6, wobei der vorgelagerte Fluidkanal (111) mit dem nachgelagerten Fluidkanal (112) erst an der Stelle zusammentrifft, an der der vorgelagerte Fluidkanal (111) mit dem nachgelagerten Fluidkanal (112) in Fluidverbindung steht.

8. Einrichtung nach Anspruch 1, wobei das Gehäuse (105) aus einem Rohr besteht.

9. Einrichtung nach Anspruch 8, wobei das Gehäuse (105) ein erstes gerades Rohrsegment (120), ein Verbindungsrohrsegment (121) und ein zweites gerades Rohrsegment (122) umfasst, wobei das erste gerade Rohrsegment (120) mit dem Verbindungsrohrsegment (121) verbunden ist, das Verbindungsrohrsegment (121) mit dem zweiten geraden Rohrsegment (122) verbunden ist und das erste gerade Rohrsegment (120) und das zweite gerade Rohrsegment (122) im Wesentlichen parallel sind.

**10.** Einrichtung nach Anspruch 1, wobei das Gehäuse (105) so geformt ist, dass es eine Kontur aufweist, die im Wesentlichen dem Umfang des Gefäßes (110) folgt.

**11.** Verfahren zum Verteilen eines Chemikalienzufuhrstroms (102), wobei das Verfahren umfasst:

Leiten eines Chemikalienzufuhrstroms (102) durch einen Chemikalienzufuhreinlass (101) in einen Chemikalienzufuhrverteiler (100), wobei der Chemikalienzufuhrstrom (102) aus einem ersten Anteil (103) und einem zweiten Anteil (104) besteht;
Leiten des ersten Anteils (103) des Chemikalienzufuhrstroms (102) aus dem Chemikalienzufuhrverteiler (100) durch eine Vielzahl von primären Chemikalienzufuhrauslässen (107) und in ein Gefäß (110); und
Leiten des zweiten Anteils (104) des Chemikalienzufuhrstroms (102) aus dem Chemikalienzufuhrverteiler (100) durch einen sekundären Chemikalienzufuhrauslass (108), der der Vielzahl von primären Chemikalienzufuhrauslässen (107) nachgelagert ist, derart, dass der zweite Anteil (104) des Chemikalienzufuhrstroms (102) nicht in den Behälter (110) gelangt.

**12.** Verfahren nach Anspruch 11, wobei der Chemikalienzufuhrverteiler (100) ein Gehäuse (105) umfassend eine oder mehrere Wände (106) umfasst, die einen langgestreckten Chemikalienzufuhrstrom-Strömungsweg (109) definieren, sowie eine Vielzahl von primären Chemikalienzufuhrauslässen (107), die entlang zumindest eines Anteils der Länge des langgestreckten Chemikalienzufuhrstrom-Strömungswegs (109) beabstandet sind.

**13.** Verfahren nach Anspruch 11 oder 12, wobei das Verhältnis einer Strömungsrate des zweiten Anteils (104) des Chemikalienzufuhrstroms (102) zur Strömungsrate des ersten Anteils (103) des Chemikalienzufuhrstroms (102) 0,1 bis 3,0 beträgt.

**14.** Verfahren nach Anspruch 11 oder 12, ferner umfassend das Recyceln des zweiten Anteils (104) des Zufuhrstroms (102) derart, dass der zweite Anteil (104) des Chemikalienzufuhrstroms (102), der aus dem Chemikalienzufuhrverteiler (100) austritt, mit dem Chemikalienzufuhrstrom (102) zusammentrifft, bevor der Chemikalienzufuhrstrom (102) den Chemikalienzufuhreinlass (101) durchtritt.

**15.** Verfahren nach Anspruch 11 oder 12, wobei die Temperatur im Inneren des Behälters (110) über 650 °C liegt und die maximale Umfangsoberflächentemperatur des Chemikalienzufuhrverteilers (100) 650 °C nicht überschreitet.

## Revendications

**1.** Appareil comprenant une cuve (110) et un distributeur d'alimentation en produit chimique (100) passant à l'intérieur de celle-ci, le distributeur d'alimentation en produit chimique (100) comprenant :

une entrée d'alimentation en produit chimique (101) qui fait passer un courant d'alimentation en produit chimique (102) dans le distributeur d'alimentation en produit chimique (100), le courant d'alimentation en produit chimique (102) étant constitué d'une première partie (103) et d'une seconde partie (104) ;
un corps (105) comprenant une ou plusieurs parois (106) et une pluralité de sorties primaires d'alimentation en produit chimique (107), dans lequel la ou les parois (106) définissent une voie allongée d'écoulement de courant d'alimentation en produit chimique (109), dans lequel la pluralité de sorties primaires d'alimentation en produit chimique (107) sont espacées le long d'au moins une partie de la longueur de la voie allongée d'écoulement de courant d'alimentation en produit chimique (109), et dans lequel la pluralité de sorties primaires d'alimentation en produit chimique (107) sont conçues pour faire passer la première partie (103) du courant d'alimentation en produit chimique (102) hors du distributeur d'alimentation (100) et dans la cuve (110) ; et
une sortie secondaire d'alimentation en produit chimique (108) en aval de la pluralité de sorties primaires d'alimentation en produit chimique (107), dans lequel la sortie secondaire d'alimentation en produit chimique (108) est conçue pour faire passer la seconde partie (104) du courant d'alimentation en produit chimique (102) hors du distributeur d'alimentation en produit chimique (100) de telle sorte que la seconde partie (104) du courant d'alimentation en produit chimique (102) est amenée à passer par le distributeur d'alimentation en produit chimique (100) et ne pénètre pas dans la cuve (110).

**2.** Appareil selon la revendication 1, dans lequel :

la ou les parois (106) définissent un passage de fluide en amont (111) et un passage de fluide en aval (112) de la voie allongée d'écoulement de courant d'alimentation en produit chimique (109) ;

le passage de fluide en amont (111) est en communication fluidique avec l'entrée d'alimentation en produit chimique (101) ;

le passage de fluide en amont (111) est en communication fluidique avec le passage de fluide en aval (112) ; et

le passage de fluide en aval (112) est en communication fluidique avec la pluralité de sorties primaires d'alimentation en produit chimique (107) et avec la sortie secondaire d'alimentation en produit chimique (108).

3. Appareil selon la revendication 2, dans lequel le passage de fluide en amont (111) est séparé du passage de fluide en aval (112) par une ou plusieurs parois (106).

4. Appareil selon les revendications 2 ou 3, dans lequel le passage de fluide en aval (112) entoure le passage de fluide en amont (111).

5. Appareil selon l'une quelconque des revendications 2 à 4, dans lequel le passage de fluide en amont (111) comprend une forme cylindrique, et le passage de fluide en aval (112) comprend une forme de coquille cylindrique entourant la forme cylindrique.

6. Appareil selon l'une quelconque des revendications 2 à 5, dans lequel le passage de fluide en amont (111) et le passage de fluide en aval (112) forment une géométrie coaxiale.

7. Appareil selon l'une quelconque des revendications 2 à 6, dans lequel le passage de fluide en amont (111) ne se combine pas avec le passage de fluide en aval (112) jusqu'à l'endroit où le passage de fluide en amont (111) est en communication fluidique avec le passage de fluide en aval (112).

8. Appareil selon la revendication 1, dans lequel le corps (105) consiste en un tube.

9. Appareil selon la revendication 8, dans lequel le corps (105) comprend un premier segment de tube droit (120), un segment de tube de raccordement (121), et un second segment de tube droit (122), dans lequel le premier segment de tube droit (120) est raccordé au segment de tube de raccordement (121), le segment de tube de raccordement (121) est raccordé au second segment de tube droit (122), et le premier segment de tube droit (120) et le second segment de tube droit (122) sont sensiblement parallèles.

10. Appareil selon la revendication 1, dans lequel le corps (105) est formé pour avoir un contour qui suit sensiblement le périmètre de la cuve (110).

11. Procédé permettant de distribuer un courant d'alimentation en produit chimique (102), le procédé comprenant :

le passage d'un courant d'alimentation en produit chimique (102) à travers une entrée d'alimentation en produit chimique (101) dans un distributeur d'alimentation en produit chimique (100), le courant d'alimentation en produit chimique (102) étant constitué d'une première partie (103) et d'une seconde partie (104) ;

le passage de la première partie (103) du courant d'alimentation en produit chimique (102) hors du distributeur d'alimentation en produit chimique (100) à travers une pluralité de sorties primaires d'alimentation en produit chimique (107) et dans une cuve (110) ; et

le passage de la seconde partie (104) du courant d'alimentation en produit chimique (102) hors du distributeur d'alimentation en produit chimique (100) par une sortie secondaire d'alimentation en produit chimique (108) en aval de la pluralité de sorties primaires d'alimentation en produit chimique (107) de telle sorte que la seconde partie (104) du courant d'alimentation en produit chimique (102) ne pénètre pas dans la cuve (110).

12. Procédé selon la revendication 11, dans lequel le distributeur d'alimentation en produit chimique (100) comprend un corps (105) comprenant une ou plusieurs parois (106) définissant une voie allongée d'écoulement de courant d'alimentation en produit chimique (109) et une pluralité de sorties primaires d'alimentation en produit chimique (107) espacées le long d'au moins une partie de la longueur de la voie allongée d'écoulement de courant d'alimentation en produit chimique (109).

13. Procédé selon la revendication 11 ou 12, dans lequel le rapport entre un débit de la seconde partie (104) du courant d'alimentation en produit chimique (102) et le débit de la première partie (103) du courant d'alimentation en produit chimique (102) va de 0,1 à 3,0.

14. Procédé selon la revendication 11 ou 12, comprenant en outre le recyclage de la seconde partie (104) du courant d'alimentation (102) de telle sorte que la seconde partie (104) du courant d'alimentation en produit chimique (102) qui sort du distributeur d'alimentation en produit chimique (100) est combinée avec le courant d'alimentation en produit chimique (102) avant que le courant d'alimentation en produit chimique (102) ne passe par l'entrée d'alimentation en produit chimique (101).

15. Procédé selon la revendication 11 ou 12, dans lequel la température à l'intérieur de la cuve (110) est supérieure à 650 °C et la température maximale de surface circonférentielle du distributeur d'alimentation en produit chimique (100) ne dépasse pas 650 °C.

FIG. 1B

FIG. 1A

FIG. 1D

FIG. 1C

EP 4 221 878 B1

FIG. 1E

FIG. 2

FIG. 3A

FIG. 3B

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6042717 A
- EP 0958235 A1
- US 9370759 B2
- US 868507